# EUROPEAN PATENT APPLICATION

(11) **EP 0 714 968 A2**
(43) Date of publication of application: **05.06.1996**
(21) Application number: 95306879.8
(22) Date of filing: 29.09.1995
(51) Int. Cl.: C09K 15/34

(54) **Natural antioxidant and method of preparing the same**

(30) Priority: 02.12.1994 JP 299566/94
(71) Applicant: UCC UESHIMA COFFEE CO., LTD., Kobe-shi, Hyogo (JP)
(72) Inventor: Okada, Tadashi, c/o Oryza Oil & Fat Chem. Co. Ltd., Ichinomiya-shi, Aichi (JP); Hirazawa, Hisanori, c/o UCC Techno-Develop. Co.Ltd, Kobe-shi, Hyogo (JP)
(74) Representative: Madeley, June Margaret

(57) **Abstract**

Disclosed herein are a natural antioxidant which can be readily prepared from a natural material such as coffee beans with excellent antioxidant property for remarkably improving the quality of food or the like, and a method of preparing the same. The inventive antioxidant contains C-5-HT which is expressed in the following general formula: 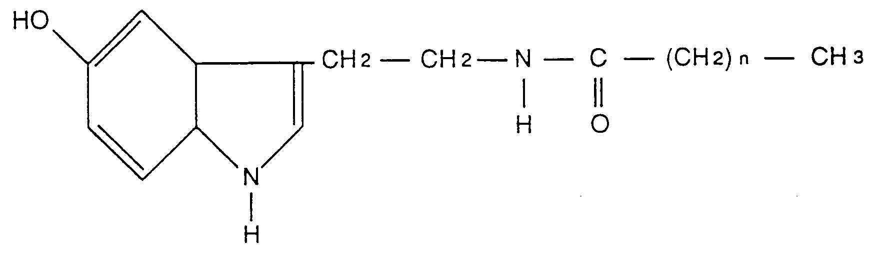
The method of preparing a natural antioxidant comprises the steps of extracting pulverized raw coffee beans or coffee grounds with aqueous ethyl alcohol of at least 40 percent by weight in concentration, and concentrating the extract solution or drying the same into powder.

## Description

The present invention relates to a natural antioxidant which is suitably employed as an oxidation inhibitor for food or cosmetics, and a method of preparing the same.

It is well known that coffee beans and cacao beans contain various antioxidant materials. For example, it is well known that there are water soluble antioxidant materials such as chlorogenic acid, caffeinic acid, ferulic acid and p-coumaric acid, and oil soluble antioxidant materials such as tocopherol.

In relation to methods of extracting the aforementioned water soluble antioxidant materials from coffee beans, there have been reported a method of treating raw coffee beans with proteolytic and cellulolytic enzymes and thereafter extracting the same with water (Japanese Patent Laying-Open No. 58-138347 (1983)) and a method of pulverizing raw coffee beans to not more than 100 µm and extracting the same with hot water after defatting (Japanese Patent Laying-Open No. 62-111671 (1987)).

In recent years, requirement for preserves such as ready-to-eat food is increased in the field of food etc., while there frequently arises a problem of deterioration in quality of such products resulting from oxidation. Therefore, study is made on a natural antioxidant providing with superior oxidation resistance for stably keeping the quality of the products for a long time.

An aim of the present invention is to provide a natural antioxidant which can be readily prepared from a natural material such as coffee beans with excellent oxidation resistance for remarkably improving the quality of food or the like, and a method of preparing the same.

The inventors have fractionated materials which are contained in coffee beans and expected to bring oxidation resistance in detail and made comparison tests as to the oxidation resistance, to discover that a section extracted with ethyl alcohol contains a component having extremely strong antioxidant property.

The component of the extracted section has been analyzed, to detect 0.05 to 0.1 percent by weight of Nβ-alkanoyl-5-hydroxytryptamine (hereinafter referred to as C-5-HT). No report has yet been found in relation to antioxidant property of such an ethyl alcohol extract obtained from coffee beans.

In order to solve the aforementioned problem, a natural antioxidant according to the present invention contains C-5-HT which is represented by the following general formula: 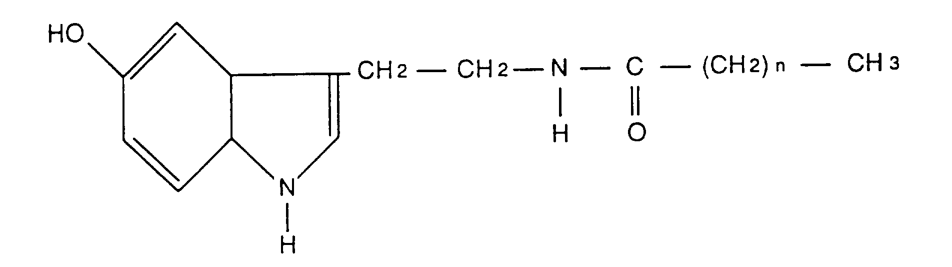 wherein n represents an integer.

According to another aspect of the present invention, the natural antioxidant contains an extract which is obtained by extracting coffee beans with aqueous ethyl alcohol of at least 40 percent by weight in concentration as an effective component.

According to still another aspect of the present invention, the natural antioxidant is prepared by adding at least 5 percent by weight of alanine to an extract which is obtained by extracting coffee beans with aqueous ethyl alcohol of at least 40 percent by weight in concentration.

According to a further aspect of the present invention, the natural antioxidant is prepared by adding at least 5 percent by weight of glycine to an extract which is obtained by extracting coffee beans with aqueous ethyl alcohol of at least 40 percent by weight in concentration.

In order to solve the aforementioned problem, further, a method of preparing a natural antioxidant according to the present invention comprises the steps of extracting pulverized raw coffee beans or coffee grounds with aqueous ethyl alcohol of at least 40 percent by weight in concentration for obtaining an extract solution containing C-5-HT, and concentrating or drying the extract solution for obtaining a concentrate or powder.

The method according to the present invention may further comprise a step of adding at least one compound selected from the group consisting of alanine and glycine to the obtained concentrate or powder in concentration of at least 5 percent by weight.

According to the present invention, the term "coffee grounds" indicates residues, obtained after extracting roasted raw coffee beans with water or the like in preparation of coffee or a coffee product such as liquid coffee or instant, for example. The raw material for coffee is prepared from seeds (raw coffee beans) included in berries (coffee cherries) of a coffee tree, which is a rubiaceous evergreen shrub. The raw coffee beans are obtained by removing gummy sarcocarp as well as shells called parchment and exodermis called silver skin from coffee cherries. The raw coffee beans (green coffee) as obtained are roasted for preparing coffee or a coffee product. The roasted beans are generally milled for extracting. Through such milling, coffee powder materials of various grain sizes are prepared by rough grinding, medium grinding, fine grinding etc. in response to finally obtained coffee products and flavors of the coffee products for drinking. Regular coffee which is served at coffee shops, restaurants and homes is obtained by pouring hot water into coffee powder which is prepared in the aforementioned manner and extracting the same. Dregs of the coffee powder remaining after such extracting are included in the coffee grounds according to the present invention. In steps of preparing instant, on the other hand, concentrated coffee is prepared by roughly grinding roasted beans and introducing the same into a coffee brewer for extracting the same with hot water. The concentrated coffee as prepared is dried by a method such as spray-drying or freeze-drying, for preparing instant. Grounds of the roasted coffee beans remaining after such preparation are included in the coffee grounds according to the present invention. In preparation of liquid coffee (brewed liquid coffee) which is filled in a can, a bottle, a PET bottle or a standing pouch and put on the market, further, roasted coffee beans or milled particles thereof are extracted so that sugar, milk etc. are added to and uniformly mixed with a liquid obtained by such extracting at need, and the obtained product is passed through a sterilization step and thereafter filled in a proper container for shipment. Residues after the extracting of the roasted coffee beans or milled particles thereof in such preparation of the liquid coffee are also included in the coffee grounds according to the present invention.

A composition according to the present invention can contain an effective amount of C-5-HT with a carrier. The carrier can be prepared from water, alcohol such as ethyl alcohol, or saccharide. The content of C-5-HT in the composition is preferably at least 0.01 percent by weight. The composition may further contain an additive such as alanine or glycine for reinforcing the antioxidant effect.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a characteristic diagram showing relations between elapsed times and absorbance values obtained as the results of an antioxidant property comparison test in relation to Examples 1 to 3 and comparative examples 1 and 2;
Fig. 2 is a characteristic diagram showing relations between elapsed times and absorbance values obtained as the results of an antioxidant property comparison test in relation to Examples 4 to 8, comparative example 3 and a control;
Fig. 3 is a characteristic diagram showing relations between elapsed times and absorbance values obtained as the results of an antioxidant property comparison test in relation to Example 6, catechin and a control;
Fig. 4 is a characteristic diagram showing relations between elapsed times and absorbance values obtained as the results of an antioxidant property comparison test in relation to Examples 6 and 9 and a control;
Fig. 5 is a characteristic diagram showing relations between elapsed times and absorbance values obtained as the results of an antioxidant property comparison test in relation to Examples 6, 10 and 11, comparative example 4 and a control;
Fig. 6 is a characteristic diagram showing relations between elapsed times and absorbance values obtained as the results of an antioxidant property comparison test in relation to Examples 6, 12 and 13, comparative example 5 and a control; and
Fig. 7 is a characteristic diagram showing relations between elapsed times and absorbance values obtained as the results of an antioxidant property comparison test in relation to Example 14 and a control.

### DESCRIPTION OF THE PREFERRED EMBODIMENTS

C-5-HT is preferably contained in the natural antioxidant in an amount of at least 0.01 percent by weight as an effective component. If the content of C-5-HT is less than 0.01 percent by weight, it is difficult to attain sufficient antioxidant property.

In the above general formula, the carbon number n of fatty acid is preferably in the range of about 18 to 24, for example, due to presence in a natural substance such as coffee beans or cacao beans in a relatively large amount. According to experiments made by the inventors, it has been confirmed that a relatively excellent antioxidant action is attained with a carbon number of this degree. For example, carbon numbers n of C-5-HT extracted from coffee beans were as follows:
n = 18 ... 3 percent by weight
n = 20 ... 36 percent by weight
n = 22 ... 55.5 percent by weight
n = 24 ... 5.5 percent by weight

The raw material for the natural antioxidant is prepared from coffee beans since the coffee beans contain a relatively large amount of C-5-HT, and it is possible to obtain a relatively homogeneous raw material in a large amount as raw coffee beans or coffee grounds.

Further, ethyl alcohol is employed as an extraction solvent for coffee beans since it is possible to recover the C-5-HT in a relatively excellent yield with ethyl alcohol, and the extract can be readily applied to the field of food etc.

The concentration of the ethyl alcohol is set to be at least 40 percent by weight since a sufficient yield of the C-5-HT cannot be attained if the concentration is less than 40 percent by weight. Preferably, the concentration of the ethyl alcohol is at least 50 percent by weight, since the yield of the C-5-HT is remarkably increased in this case.

The extract which is obtained from the coffee beans with the ethyl alcohol contains water soluble antioxidant materials such as chlorogenic acid and caffeine contained in the coffee beans, in addition to the C-5-HT. Particularly when at least 40 percent by weight of ethyl alcohol is employed, the extract contains C-5-HT, chlorogenic acid and caffeine in a balanced manner, to attain an excellent antioxidant action.

When raw coffee beans are extracted with at least 40 percent by weight of aqueous ethyl alcohol, the extract contains C-5-HT, chlorogenic acid and caffeine in the following amounts, for example:
C-5-HT: 0.1 to 0.5 percent by weight
Chlorogenic Acid: 18 to 28 percent by weight
Caffeine: 8 to 10 percent by weight
Rest (saccharide, protein etc.): 61.5 to 73.9 percent by weight

Glycine or alanine is added to the extract which is obtained from the coffee beans with at least 40 percent by weight of ethyl alcohol, in order to improve activity of the antioxidant by a synergistic action of the glycine or alanine and the C-5-HT. The amount of the glycine or alanine is preferably at least 5 percent by weight with respect to the ethyl alcohol extract. This is because at least this degree of content is required for improving antioxidant property by the synergistic action.

### Examples

Examples of the present invention are now described with reference to the drawings.

### (1) Preparation of Raw Material

As a pretreatment for efficiently extracting antioxidant components from coffee beans, raw coffee beans were roughly crushed into flakes by a roll crusher, and the roughly crushed flakes were further crushed into grain sizes of 30 mesh passes by a hammer crusher.

### (2) Study of Extraction Solvent

Then, the following various solvents were employed to extract antioxidant materials from the raw coffee beans, for making a test for comparing antioxidant property of the extracts:
Example 1 ... 98 percent by weight of ethyl alcohol
Example 2 ... mixed solution of hexane and ethyl alcohol (hexane:ethyl alcohol= 7:3)
Example 3 ... chloroform
Comparative Example 1... hot water
Comparative Example 2 ... n-hexane

### [1] Extraction of Antioxidant Component

### (Example 1)

1000 ml of 98 wt.% ethyl alcohol was added to 100 g of the crushed particles of the raw coffee beans prepared in the aforementioned item (1) and stirred for about 1 hour with heating/reflux, for extracting antioxidant materials from the raw coffee beans. Then, the ethyl alcohol was distilled away from the extract solution, which in turn was dried to recover 10.7 g of purified powder.

### (Example 2)

1000 ml of a mixed solution of hexane and ethyl alcohol (7:3) was employed as an extraction solvent, to extract antioxidant components through an operation similar to that in Example 1. 6.12 g of purified powder was recovered.

### (Example 3)

1000 ml of chloroform was employed as an extraction solvent, to extract antioxidant components through an operation similar to that in Example 1. 6.56 g of purified powder was recovered.

### (Comparative Example 1)

1000 ml of hot water was added as an extraction solvent to 100 g of the crushed particles of the raw coffee beans prepared in the above item (1), and stirred for about 1 hour with heating up to 90°C, for extracting antioxidant materials from the raw coffee beans. Then, 27.6 g of purified powder was recovered by drying under a reduced pressure.

### (Comparative Example 2)

1000 ml of hexane was employed as an extraction solvent, to extract antioxidant components through an operation similar to that in Example 1. 5.76 g of purified powder was recovered.

Table 1 shows the results of contents of the antioxidant components contained in the extracts as to Examples 1 to 3 and comparative examples 1 and 2.

**Table 1**

| Sample | Extraction Solvent | Content of Antioxidant Component in Extract (wt%) | | | |
|---|---|---|---|---|---|
| | | Chlorogenic acid | Caffeic acid | Caffeine | C-5-HT |
| Example 1 | ethyl alcohol | 13.0 | 0.0 | 8.2 | 0.48 |
| Example 2 | hexane + ethyl alcohol | 0.0 | 0.0 | 7.5 | 0.85 |
| Example 3 | chloroform | 0.0 | 0.0 | 3.5 | 0.96 |
| Comparative Example 1 | water | 23.9 | 0.0 | 7.3 | 0.0 |
| Comparative Example 2 | hexane | 0.0 | 0.0 | 2.4 | 0.0 |
| raw material: raw coffee beans | | | | | |

As understood from Table 1, Examples 1 to 3 contained C-5-HT, while fatty acid amide compounds were hardly extracted in comparative examples 1 and 2.

### [2] Comparison of Antioxidant Property

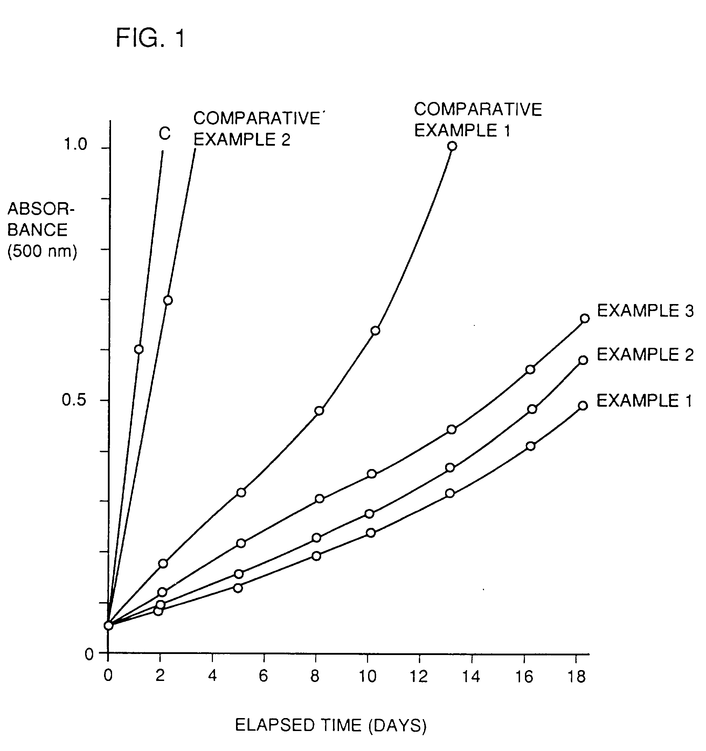

Then, an antioxidant property comparison test was made on Examples 1 to 3 and comparative examples 1 and 2. In this test, 5 mg of each fraction sample was dissolved in 0.14 g of linoleic acid with 10 ml of ethyl alcohol, followed by adding 10 ml of a phosphate buffer solution of pH 7 and making up to 25 ml with distilled water, and this mixed solution was held in an incubator at 50°C for measuring peroxide values by an iron rhodanate method over days. Fig. 1 shows the results.

As shown in Fig. 1, Examples 1 to 3 containing fatty acid amide compounds exhibited excellent antioxidant property as compared with comparative examples 1 and 2. Comparing Example 1 with comparative example 1 in particular, it is understood that antioxidant property of Example 1 was extremely improved by containing about 0.5 percent by weight of the fatty acid amide compound although the content of chlorogenic acid was smaller by at least 10 percent by weight than that in comparative example 1. Referring to Fig. 1, the curve C shows the result of a control to which no antioxidant material was added.

As to the extraction solvents, it was possible to extract the maximum amount of C-5-HT in Example 3 employing chloroform. In Example 3, however, water soluble antioxidant materials of chlorogenic acid and caffeine were hardly extracted and hence its antioxidant property was lower than that of Example 1. Consequently, it is understood that Example 1 employing ethyl alcohol is the most preferable solvent among Examples 1 to 3.

### (3) Study of Ethyl Alcohol Concentration

Then, another antioxidant property comparison test was made by extracting antioxidant materials from coffee beans with extraction solvents prepared from aqueous ethyl alcohol samples of various concentration values. The ethyl alcohol concentration values of the solvents as employed were as follows:
Example 4 ... 90 percent by weight
Example 5 ... 80 percent by weight
Example 6 ... 70 percent by weight
Example 7 ... 50 percent by weight
Example 8 ... 40 percent by weight
Comparative Example 3 ... 30 percent by weight

### [1] Extraction of Antioxidant Component

1000 ml of aqueous ethyl alcohol of each concentration value was added to 100 g of the crushed particles of the raw coffee beans prepared in the above item (1) and stirred for about 1 hour with heating/reflux, for extracting antioxidant materials from the raw coffee beans. Then, the ethyl alcohol was distilled away from the extract solution, which in turn was dried to recover purified powder. The yields of the purified powder were as follows:
Example 4 ... 16.8 g
Example 5 ... 21.72 g
Example 6 ... 23.74 g
Example 7 ... 25.52 g
Example 8 ... 25.52 g
Comparative Example 3 ... 24.30 g

Table 2 shows the contents of the antioxidant components in the extracts as to Examples 4 to 8 and comparative example 3.

**Table 2**

| Sample | Concentration of Ethyl Alcohol wt% | Content of Antioxidant Component in Extract (wt%) | | | |
|---|---|---|---|---|---|
| | | Chlorogenic acid | Caffeinic acid | Caffeine | C-5-HT |
| Example 4 | 90 | 18.7 | 0.0 | 9.4 | 0.34 |
| Example 5 | 80 | 27.1 | 0.0 | 9.1 | 0.24 |
| Example 6 | 70 | 26.6 | 0.0 | 8.3 | 0.23 |
| Example 7 | 50 | 27.4 | 0.0 | 8.0 | 0.12 |
| Example 8 | 40 | 28.1 | 0.0 | 8.3 | 0.03 |
| Comparative Example 3 | 30 | 28.7 | 0.0 | 7.5 | 0.0 |
| raw material: raw coffee beans | | | | | |

As understood from Table 2, Examples 4 to 8 contained at least 0.01 percent by weight of fatty acid amide compounds respectively, while comparative example 3 hardly contained C-5-HT. As understood from Examples 4 to 7, the yields of the fatty acid amide compounds were remarkably increased when the concentration values of ethyl alcohol were at least 50 percent by weight.

Chlorogenic acid and caffeine were extracted in relatively high yields in all of Examples 4 to 8 and comparative example 3.

### [2] Comparison of Antioxidant property

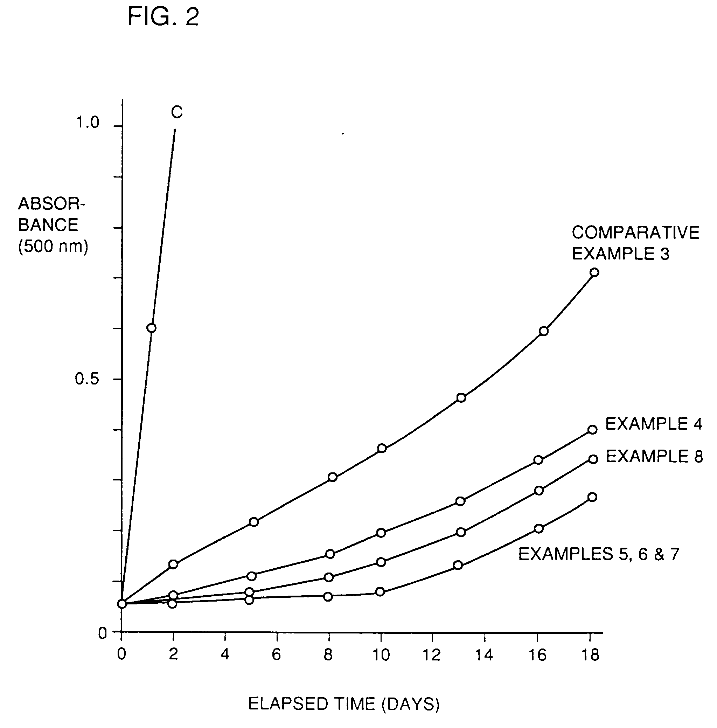

Fig. 2 shows the results of an antioxidant property comparison test which was made on Examples 4 to 8 and comparative example 3. As to the test conditions, samples were prepared by a method similar to the above, to measure peroxide values by an iron rhodanate method.

As shown in Fig. 2, all of Examples 4 to 8 exhibited superior antioxidant property to comparative example 3. In particular, Examples 5 to 7 exhibited excellent property. The antioxidant property of Example 4 was slightly low as compared with Examples 5 to 7, considerably due to difference in content of chlorogenic acid. Consequently, it has been proved that the concentration of ethyl alcohol employed as an extraction solvent is preferably at least 40 percent by weight, more preferably about 50 to 80 percent by weight.

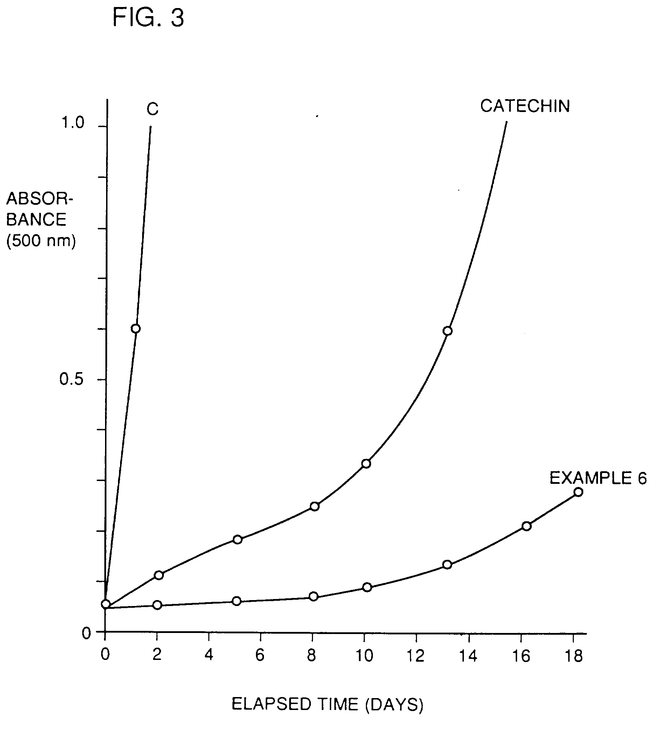

Fig. 3 shows the results of still another antioxidant property comparison test which was made on Example 6 (70 percent by weight of ethyl alcohol) and catechin which was extracted from tea. Catechin is generally employed as an antioxidant for food. As to the test conditions, samples were prepared by a method similar to that in the above, so that peroxide values were measured through an iron rhodanate method.

As shown in Fig. 3, Example 6 exhibited superior antioxidant property to catechin. While antioxidant property of catechin was remarkably reduced upon a lapse of about 10 days after starting of the test, Example 6 maintained excellent property up to a lapse of about 18 days after starting of the test. Consequently, it has been confirmed that Example 6 is superior in antioxidant property to catechin.

### (4) Study of Content of C-5-HT

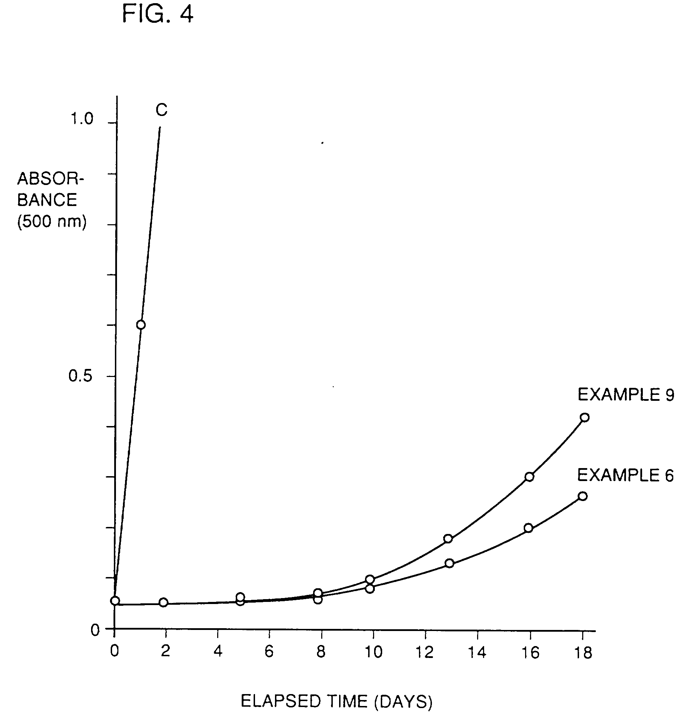

Then, an antioxidant property comparison test was made on Example 6 and an isolated purified substance of C-5-HT. The isolated purified substance of C-5-HT was prepared by purifying a chloroform extract from coffee beans (Example 9). As to the test conditions, samples were prepared by a method similar to that in the above, so that peroxide values were measured through an iron rhodanate method. Fig. 4 shows the results.

As shown in Fig. 4, Example 9 exhibited a superior antioxidant action to Example 6, while no particular difference appeared in antioxidant property up to about a lapse of 10 days after starting of the test. This is conceivably because the C-5-HT contained in Example 6 improved the antioxidant action by a synergistic effect with chlorogenic acid and caffeine. Thus, it has been provided that the C-5-HT effectively attained the antioxidant action in Example 6 at a relatively small amount.

### (5) Study of Synergistic Effect of Alanine and Glycine

Then, alanine and glycine were added to extracts which were obtained from coffee beans with 70 percent by weight of ethyl alcohol. The 70 wt.% ethyl alcohol extracts were prepared by a method similar to that in Example 6.

### (Examples 10 to 13)

Examples 10 and 11 were prepared by adding 5 percent by weight and 10 percent by weight of alanine to the purified powder materials obtained in Example 6 respectively, while Examples 12 and 13 were prepared by adding 5 percent by weight and 10 percent by weight of glycine to such purified powder materials respectively.

### (Comparative Examples 4 and 5)

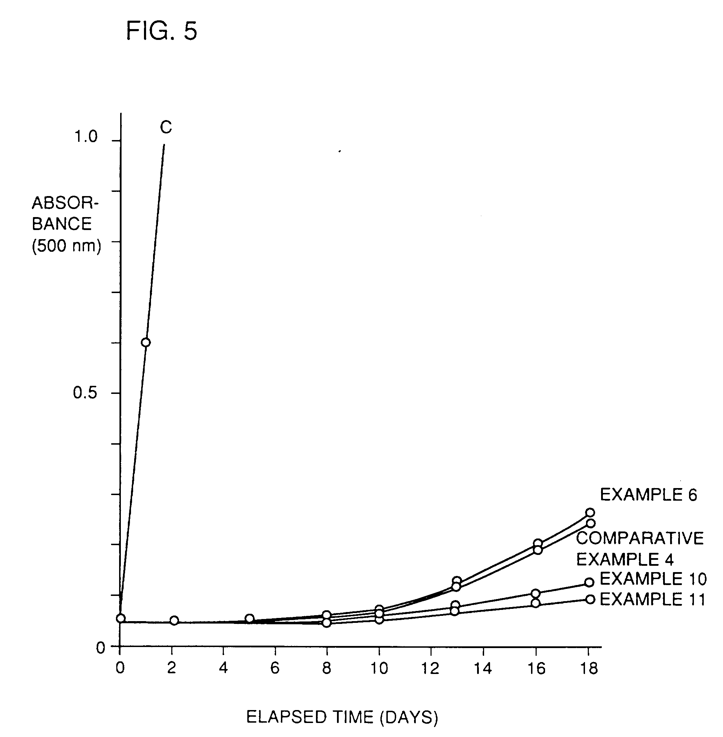

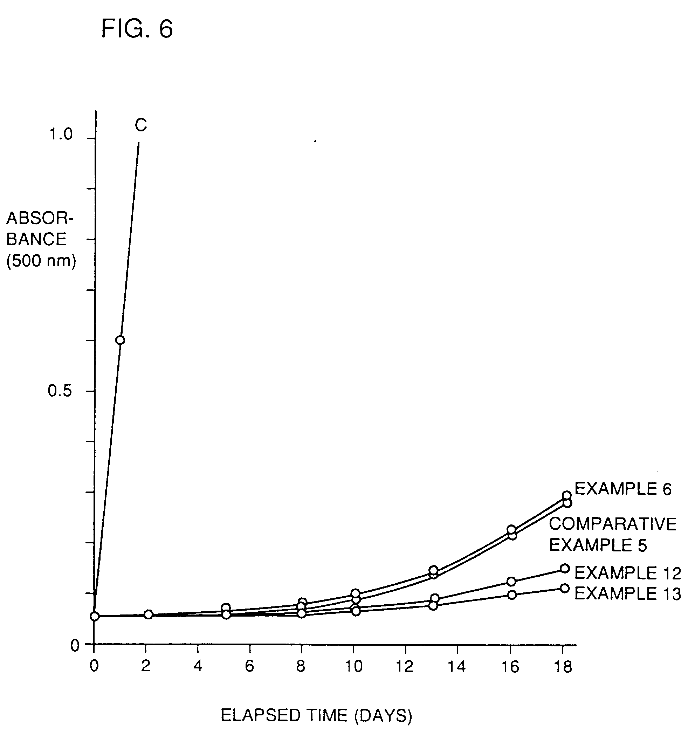

Comparative example 4 was prepared by adding 3 percent by weight of alanine to the aforementioned purified powder, while comparative example 5 was prepared by adding 3 percent by weight of glycine to such purified powder, to be similarly subjected to measurement of antioxidant property. Figs. 5 and 6 show the results.

As understood from Figs. 5 and 6, it has been proved that all of Examples 10 to 13 were improved in antioxidant property as compared with Example 6 consisting of the 70 wt.% ethyl alcohol extract. It was considered that the ethyl alcohol extract from the coffee beans was improved in activity of the antioxidant by a synergistic effect with alanine or glycine in each Example. Comparative examples 4 and 5 were substantially similar in antioxidant property to Example 6.

### (6) Study on Type of Raw Material

Then, a test was made for extracting C-5-HT from a raw material of coffee grounds.

### (Example 14)

The raw material was prepared by drying coffee grounds.

First, 1000 ml of 70 wt.% aqueous ethyl alcohol was added to 100 g of coffee grounds as prepared and stirred for about 1 hour with heating/reflux, for extracting antioxidant materials. Then, the ethyl alcohol was distilled away from the extract solution, which in turn was dried to recover purified powder. 9.62 g of purified powder was recovered. Table 3 shows contents of the antioxidant components in the extract.

**Table 3**

| Sample | Raw Material | Content of Antioxidant Component in Extract (wt%) | | | |
|---|---|---|---|---|---|
| | | Chlorogenic acid | Caffeinic acid | Caffeine | C-5-HT |
| Example 14 | coffee grounds | 2.1 | 0.0 | 0.7 | 0.42 |
| extraction solvent: 70 wt.% ethyl alcohol | | | | | |

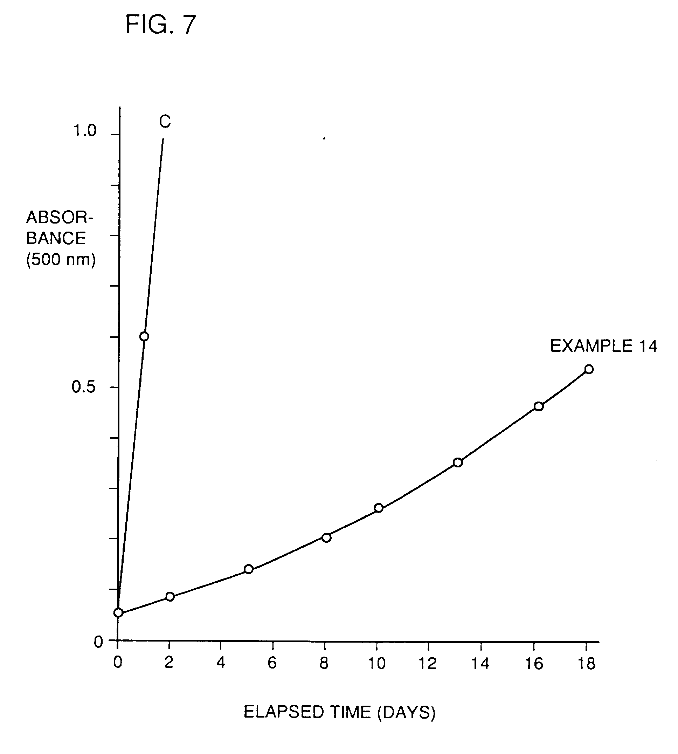

As shown in Table 3, about 0.4 percent by weight of C-5-HT was present in the ethyl alcohol extract from the coffee grounds. Contents of chlorogenic acid and caffeine were relatively small. Fig. 7 shows the result of antioxidant property of Example 14.

As understood from Fig. 7, it has been confirmed that the ethyl alcohol extract from the coffee grounds also exhibited relatively excellent antioxidant property.

According to the inventive natural antioxidant, as hereinabove described, it is possible to attain excellent antioxidant property by the action of the C-5-HT. Therefore, the present invention can achieve meritorious effects of increasing preservability of products and remarkably improving the quality thereof by adding the antioxidant to food, cosmetics or the like. According to the present method of preparing a natural antioxidant, further, it is possible to efficiently obtain antioxidant materials having excellent activity which are present in a natural material such as coffee beans in a balanced manner.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A natural antioxidant containing Nβ-alkanoyl-5-hydroxytryptamine represented by the following general formula: 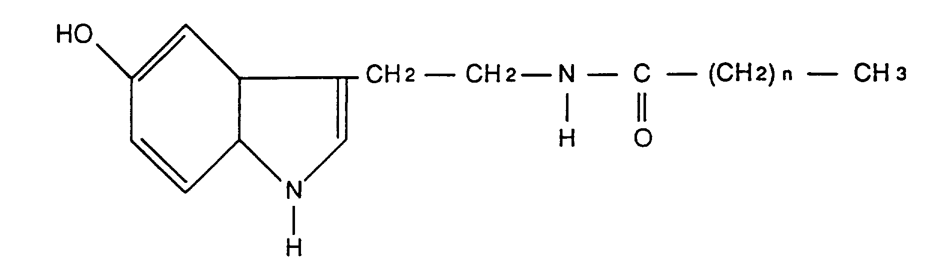 wherein n represents an integer.

2. The natural antioxidant in accordance with claim 1, wherein said integer n is in the range of 18 to 24.

3. The natural antioxidant in accordance with claim 1 or 2, containing an extract obtained by extracting coffee beans with aqueous ethyl alcohol of at least 40 percent by weight in concentration as an effective component, said Nβ-alkanoyl-5-hydroxytryptamine being contained in said extract.

4. The natural antioxidant in accordance with claim 3, further containing at least 5 percent by weight of alanine.

5. The natural antioxidant in accordance with claim 3, further containing at least 5 percent by weight of glycine.

6. The natural antioxidant in accordance with claim 3, containing an extract obtained by extracting coffee beans with aqueous ethyl alcohol of at least 50 percent by weight in concentration as an effective component.

7. The natural antioxidant in accordance with claim 3 or 6, wherein said extract contains chlorogenic acid and caffeine.

8. A method of preparing a natural antioxidant, comprising the steps of:
extracting pulverized raw coffee beans or coffee grounds with aqueous ethyl alcohol of at least 40 percent by weight in concentration for obtaining an extract solution containing Nβ-alkanoyl-5-hydroxytryptamine represented by the following general formula: 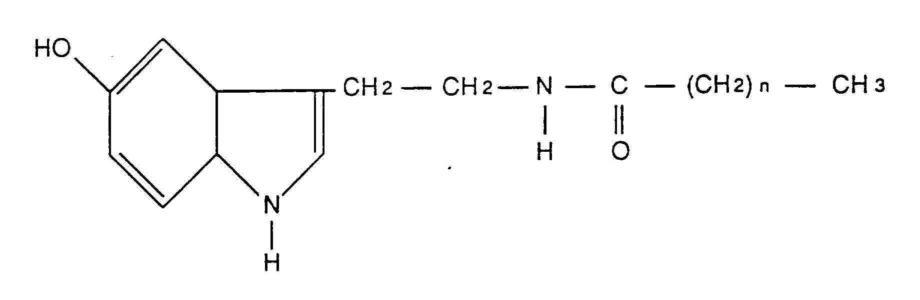 and wherein n represents an integer,
concentrating or drying said extract solution for obtaining a concentrate or powder.

9. The method in accordance with claim 8, wherein concentration of ethyl alcohol in said aqueous ethyl alcohol is at least 50 percent by weight.

10. The method in accordance with claim 8 or 9, further comprising a step of adding at least one compound selected from the group consisting of alanine and glycine to said concentrate or said powder in concentration of at least 5 percent by weight.
